# EUROPEAN PATENT APPLICATION

(11) **EP 3 992 396 A1**
(43) Date of publication of application: **04.05.2022**
(21) Application number: 20888281.1
(22) Date of filing: 13.11.2020
(51) Int. Cl.: E04H 3/12, E04H 3/30, G05D 1/02, G06N 20/00

(54) **AUTOMATIC RETRACTABLE SEAT PREVENTING OPERATION ERROR CAUSED BY OBSTACLE, AND CONTROL METHOD THEREOF**

(30) Priority: 14.11.2019 KR 20190145953
(71) Applicant: Nseating Co., Ltd., Jeollabuk-do 54354 (KR)
(72) Inventor: HAN, Gyuil, Iksan-si Jeollabuk-do 54653 (KR)
(74) Representative: Isarpatent
(86) International application number: PCT/KR2020/015963
(87) International publication number: WO 2021/096277

(57) **Abstract**

An automatic retractable seat preventing an operation error caused by an obstacle according to the present invention comprises: a retractable seat which is ejected or retracted by a driving unit part; a sensor part disposed on the retractable seat to detect an object in the path in which the retractable seat is ejected or retracted; a database part in which information detected by the sensor part is stored; and a control part, which: operates the driving unit part; if an object detection signal is received from the sensor part, compares the signal with information stored in the database part, and determines whether an obstacle exists in the path in which the retractable seat is ejected or retracted; and if it is determined that the obstacle exists, stops the operation of the driving unit part.

## Description

### [Technical Field]

The present invention relates to an automatic retractable grandstand and a control method thereof, and more particularly to an automatic retractable grandstand capable of preventing an operation error due to an obstacle and a method for controlling the same.

### [Background Art]

In general, the grandstand refers to a stair-like side-by-side arrangement of seats for people to sit on while they are watching a play, a movie, an athletic event, an artwork, or the like.

The grandstand is designed in a large size to accommodate a large number of people and thus takes up a lot of space inside the auditorium. This hinders the efficient use of the space inside the auditorium.

In order to solve this problem, a retractable grandstand has been used in recent years.

The retractable grandstand is a movable grandstand that allows the limited space to be utilized efficiently. When not in use, the retractable grandstand is stored on one side of the wall, and when in use, the rows of seats are automatically drawn out by a driving unit with a power device and then automatically retracted again after use. The retractable grandstand has been used in various facilities such as school gymnasiums, community center auditoriums, performance halls, and cultural halls.

However, the retractable grandstand is very heavy because it is manufactured using a square-shape steel pipe. In addition, the use of a power device such as a motor may cause a safety accident if there is any obstacle, including a person, around the retractable grandstand or on a path where the retractable grandstand is drawn out or retracted.

Also, when the retractable grandstand is retracted, the mechanical structure or driving device of the grandstand may be deformed due to an internal obstacle, and this may lead to a breakdown of the retractable grandstand itself.

These problems may make it difficult to maintain, repair, and ensure the stability of the retractable grandstand.

### [Prior Art Documents]

### [Patent Documents]

(Patent Document 1) Korean Patent Publication No. 10-2011-0069013 (published on June 22, 2011)

### [Disclosure]

### [Technical Problem]

Therefore, an object of the present invention is to detect an object existing inside the retractable grandstand or around a movement path of the retractable grandstand when the retractable grandstand is drawn out or retracted, determine whether the detected object is an obstacle, and stop the driving device of the retractable grandstand when the detected object is an obstacle, thereby preventing safety accidents while the retractable grandstand is drawn out or retracted, and also ensuring the stability of the retractable grandstand itself.

### [Technical Solution]

In order to achieve the above object, an automatic retractable grandstand according to the present invention for preventing an operation error caused by an obstacle comprises a retractable grandstand drawn out or retracted by a driving unit, a sensor unit installed on the retractable grandstand and detecting an object existing around a path where the retractable grandstand is drawn out or retracted, a database unit storing information detected by the sensor unit, and a control unit operating the driving unit, determining whether an obstacle exists around the drawn-out or retracted path of the retractable grandstand by comparing an object detection signal received from the sensor unit with information stored in the database unit, and controlling the driving unit to stop an operation or change a driving speed upon determining that the obstacle exists.

The sensor unit includes at least one of a current sensor unit measuring a current of the driving unit and thereby detecting a driving load of the driving unit, an infrared sensor unit measuring a change in temperature of the object existing around the drawn-out or retracted path of the retractable grandstand and thereby detecting a movement of the object, and an ultrasonic sensor unit measuring a distance to the object existing around the drawn-out or retracted path of the retractable grandstand.

The database unit includes a reference database storing reference data, wherein at least one of the current of the driving unit, the temperature change of the object around the path, and the distance to the object around the path is measured or set in advance before the operation of the driving unit and stored as the reference data, and a measurement database storing measurement data, wherein when the retractable grandstand is drawn out or retracted, at least one of the current of the driving unit, the temperature change of the object around the path, and the distance to the object around the path is measured in real time and stored as the measurement data.

If the measurement data is not included in a range of the reference data while the retractable grandstand is drawn out or retracted, the control unit determines that the obstacle exists around the path of the retractable grandstand, and controls the driving unit to stop the operation or change the driving speed.

After controlling the driving unit to stop the operation or change the driving speed upon determining that the obstacle exists around the path of the retractable grandstand, and if the measurement data is included in the range of the reference data, the control unit determines that the obstacle is removed, and controls the driving unit to be restarted or normalize the driving speed.

The database unit further includes a deep-learning database storing deep-learning data, based on a deep-learning algorithm, obtained by analyzing information that the control unit controls the driving unit upon determining that the obstacle exists, and obtained by analyzing information that the control unit controls the driving unit upon determining that the obstacle is removed, and the control unit controls the driving unit based on the deep-learning data.

The automatic retractable grandstand further comprises a communication unit capable of wired/wireless communication with a user terminal and transmitting to the user terminal at least one of information about whether the driving unit is driven, and information about whether the obstacle is detected, and the control unit controls the driving unit by receiving a signal of the user terminal from the communication unit, and transmits information on controlling the driving unit to the user terminal.

The database unit further includes an authentication database storing authenticated user information, the communication unit receives user information and a control signal of the driving unit from the user terminal and sends the received user information and control signal to the control unit, and the control unit compares the user information received from the communication unit with the user information stored in the authentication database and, if the user information is identical, draws out or retracts the retractable grandstand in response to the received control signal of the driving unit.

The sensor unit is installed in plural inside and outside the retractable grandstand.

In order to achieve the above object, a method for controlling an automatic retractable grandstand for preventing an operation error caused by an obstacle, the method comprising steps of, before a driving unit for drawing out or retracting a retractable grandstand is driven, storing, in a database unit, information about an object existing around a path where the retractable grandstand is drawn out or retracted, wherein the information is detected or set in advance by a sensor unit installed on the retractable grandstand, driving the driving unit based on a signal for drawing out or retracting the retractable grandstand received from a user terminal, detecting, by the sensor unit, an object existing around the path of or inside the retractable grandstand being drawn out or retracted, determining whether the detected object is an obstacle, by comparing an object detection signal received from the sensor unit with the information stored in the database unit, controlling the drive unit to stop or change in speed when the detected object is determined as the obstacle, determining whether the obstacle is removed; and controlling the driving unit to be restarted or normalize the speed when the obstacle is determined as being removed.

Each of the step of determining whether the detected object is an obstacle, and the step of determining whether the obstacle is removed includes a step of controlling the driving unit based on deep-learning data analyzed and stored through a deep-learning algorithm.

### [Advantageous Effects]

According to the present invention, the automatic retractable grandstand for preventing an operation error caused by an obstacle and the control method thereof include the current sensor unit for detecting the driving load of the driving unit by measuring the current of the driving unit for drawing out or retracting the retractable grandstand and also include the infrared sensor unit and the ultrasonic sensor unit for detecting an object existing around the path when the retractable grandstand is drawn out or retracted, so it is possible to detect an object existing around the drawn-out or retracted path of the retractable grandstand.

In addition, according to the present invention, the reference database for storing reference data previously measured by the current sensor unit, the infrared sensor unit, and the ultrasonic sensor unit before the driving unit is driven is used, and also the measurement database for storing measurement data measured in real time while the driving unit is driven is used. While the retractable grandstand is drawn out or retracted, it is possible to detect an object and determine whether the detected object is an obstacle by comparing the measurement data stored in the measurement database with the reference data stored in the reference database. If it is determined that the detected object is an obstacle, the operation of the driving unit is stopped to prevent safety accidents more effectively, and the stability of the retractable grandstand itself can be ensured.

In addition, according to the present invention, even after the driving unit for drawing out or retracting the retractable grandstand is stopped upon detecting an obstacle around the drawn-out or retracted path of the retractable grandstand, it is possible to continuously detect the obstacle in real time and, upon determining that the obstacle has been removed, restart the stopped driving unit.

Furthermore, according to the present invention, the communication unit capable of wired/wireless communication with the user terminal is used, so it is possible to control the retractable grandstand even from a remote location to ensure stability.

### [Description of Drawings]

FIG. 1 is a block diagram illustrating the configuration of an automatic retractable grandstand capable of preventing an operation error due to an obstacle according to the present invention.
FIG. 2 is a diagram illustrating a retractable grandstand according to the present invention.
FIG. 3 is a flow diagram illustrating a method for controlling an automatic retractable grandstand capable of preventing an operation error due to an obstacle according to the present invention.

### [Mode for Disclosure]

In the following, only parts necessary for understanding embodiments of the present invention will be described, and descriptions of other parts will be omitted in the scope not disturbing the subject matter of the present invention.

The terms and words used herein should not be construed as limited to ordinary or dictionary definition, and should be construed in light of the meanings and concepts consistent with the subject matter of the present invention on the basis of the principle that the inventor can properly define his own invention as the concept of the term to describe it in the best way. It is therefore to be understood that embodiments disclosed herein are merely exemplary and various equivalents or modifications thereof are possible.

Hereinafter, the present invention will be described in detail with reference to the accompanying drawings.

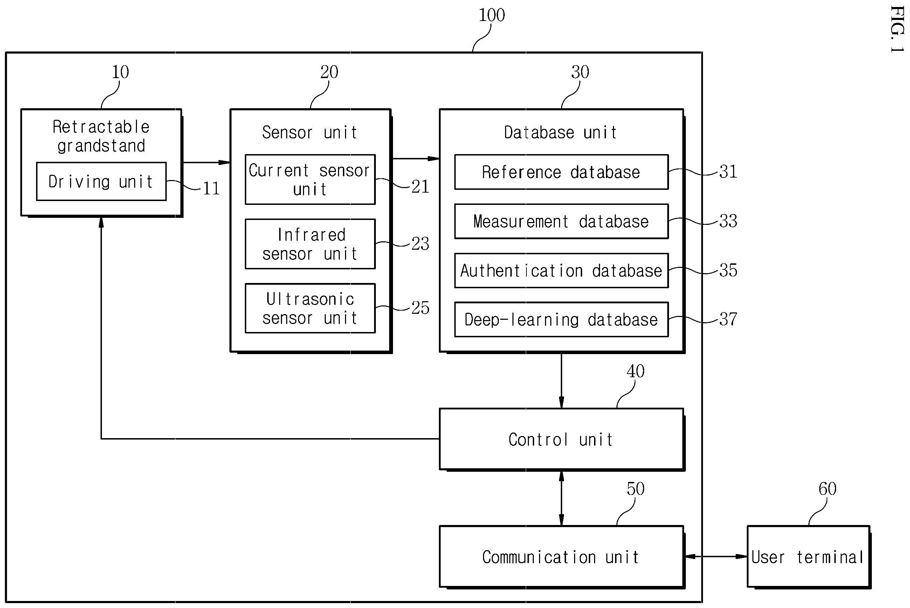

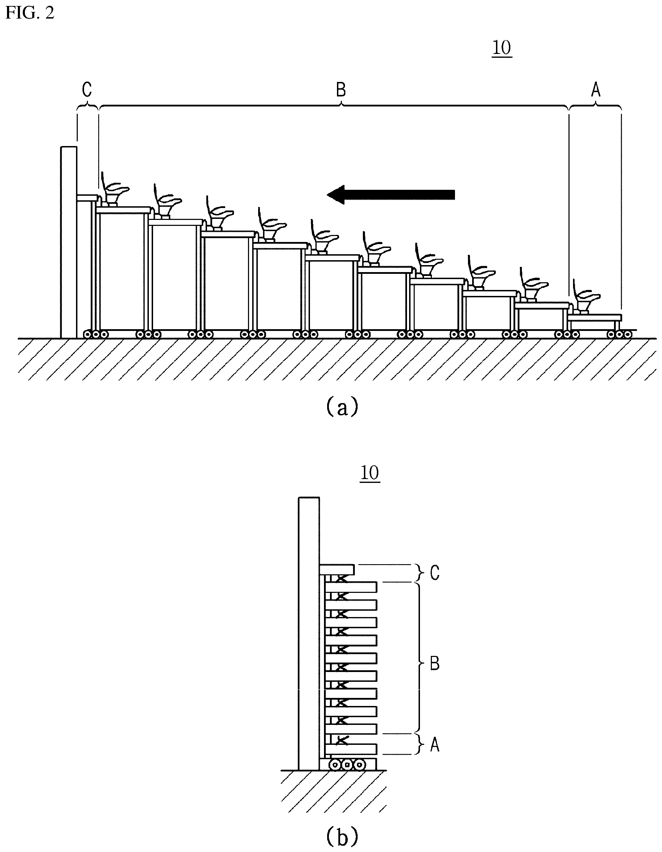

FIG. 1 is a block diagram illustrating the configuration of an automatic retractable grandstand capable of preventing an operation error due to an obstacle according to the present invention, and FIG. 2 is a diagram illustrating a retractable grandstand according to the present invention.

Referring to FIG. 1, the automatic retractable grandstand 100 for preventing an operation error due to an obstacle according to the present invention includes a retractable grandstand 10 drawn out or retracted by a driving unit 11, a sensor unit 20 installed on the retractable grandstand 10 and detecting an object on a drawn-out or retracted path of the retractable grandstand 10, a database unit 30 storing information detected by the sensor unit 20, and a control unit 40 that operates the driving unit 11, determines whether an obstacle exists on the drawn-out or retracted path of the retractable grandstand 10 by comparing an object detection signal received from the sensor unit 20 with the information stored in the database unit 30, and stops an operation of the driving unit 11 upon determining that the obstacle exists.

Referring to FIG. 2, the retractable grandstand 10 according to the present invention includes a movable grandstand (A) that can be moved by the driving unit (not shown) for drawing out or retracting the retractable grandstand 10, a plurality of passive grandstands (B) that are arranged above the movable grandstand (A) in a multi-stage form and can be moved in response to the movement of movable grandstand (A), and a fixed grandstand (C) that is fixed at the uppermost stage. The movable grandstand (A) and the passive grandstands (B) can be sequentially drawn out or retracted except for the fixed grandstand (C).

In case that the retractable grandstand 10 is drawn out (see (a) in FIG. 2), a large number of seats are provided so that spectators can be seated. In case that the grandstand is retracted (see (b) in FIG. 2), the volume occupied by the retractable grandstand 10 is reduced, thus enabling efficient use of space.

Referring again to FIG. 1, the driving unit 11 may include a power device such as a single motor or a plurality of motors. The power device is driven using internal or external power.

The driving unit 11 draws out or retracts the movable grandstand (A) of the retractable grandstand 10. By the movement of the movable grandstand (A), the plurality of passive grandstands (B) move together with the movable grandstand (A).

The driving unit 11 not only drives the movable grandstand (A) to draw out or retract the retractable grandstand 10, but also performs an operation of folding or unfolding a plurality of chairs constituting the retractable grandstand 10 in conjunction with an operation of drawing out or retracting the retractable grandstand 10. That is, the driving unit 11 is capable of folding the chairs when retracting the retractable grandstand 10, and unfolding the chairs when drawing out the retractable grandstand 10 so that users can sit.

The automatic retractable grandstand 100 for preventing an operation error due to an obstacles according to the present invention further includes the sensor unit 20. The sensor unit 20 not only detects an object inside the retractable grandstand 10 and an object around a moving path of the movable grandstand of the retractable grandstand 10, but also detects a change in surrounding conditions.

The sensor unit 20 includes a current sensor unit 21, an infrared sensor unit 23, and an ultrasonic sensor unit 25.

The current sensor unit 21 measures a current that flows when the driving unit 11 is operated, thereby detecting a driving load of the driving unit 11.

The current sensor unit 21 includes a current sensor for sensing an alternating current and a direct current. As techniques for the current sensor to sense a current, there are a current transformer scheme and a Hall element scheme. The current transformer scheme detects a primary current by measuring a secondary current through primary and secondary coils wound around a donut-shaped magnetic core. The Hall element scheme detects the strength of a magnetic field, that is, the strength or weakness of a current, by measuring the Hall voltage through the Hall element installed in the magnetic field generated by the current.

There may be two cases of a driving load generated when the driving unit 11 is operated. In case that there is an obstacle on the moving path of the movable grandstand (A) that moves to draw out the retractable grandstand 10, a more current is required compared to other case that there is no obstacle. Thus, a more current can flow in the driving unit 11 that drives the movable grandstand (A).

Similarly, even in case that there is an obstacle inside the retractable grandstand 10 when the movable grandstand (A) moves to retract the retractable grandstand 10, a more current can flow in the driving unit 11 compared to other case that there is no obstacle inside the retractable grandstand 10.

The infrared sensor unit 23 and the ultrasonic sensor unit 25 may be installed in plural on the front and side of and inside the retractable grandstand 10 to detect objects existing on the front and side of and inside the retractable grandstand 10.

The infrared sensor unit 23 measures a temperature change of an object existing on the drawn-out or retracted path of the retractable grandstand 10 and thereby detects the movement of the object. The infrared sensor unit 23 includes an infrared sensor, which emits infrared light, senses the temperature around the retractable grandstand 10, and convert it into an electrical signal. The infrared sensor includes a light emitter emitting infrared light and a light receiver sensing infrared light. The infrared sensor includes an active type that detects a change in infrared light emitted from the light emitter and received by the light receiver, and a passive type that detects only a change in external infrared light without the light emitter for emitting infrared light. The infrared sensor unit 23 according to the present invention may include both the active and passive infrared sensors.

The infrared sensor is capable of detecting infrared light emitted by an obstacle or infrared light reflected back from the obstacle and measuring the temperature that varies depending on the type of obstacle. This measurement data is stored in a measurement database 33 to be described later, and it can be used to determine whether the obstacle is a person or not.

In addition, the infrared sensor unit 23 according to the present invention may also measure a distance to the detected object. In this case, the infrared sensor unit 23 may use a triangulation technique. As in a conventional triangulation technique, when signals of the object received along two paths are reflected by right-angle prisms and incident on two image sensors, respectively, and then relative positions coincide with each other, a distance between two points is displayed.

The ultrasonic sensor unit 25 according to the present invention detects an object by measuring a distance from the object existing on the drawn-out or retracted path of the retractable grandstand 10. The ultrasonic sensor unit 25 includes an ultrasonic sensor. The ultrasonic sensor obtains distance information of the object by emitting ultrasonic waves and then measuring an arrival time of the ultrasonic waves reflected from the object.

In order to accurately detect internal conditions of the retractable grandstand 10 and external conditions around the moving path of the movable grandstand (A) when the retractable grandstand 10 is drawn out or retracted, the sensor unit 20 may be installed in plural at regular intervals inside and outside the retractable grandstand 10. As the number of such installed sensor units 20 increases, it is possible to more accurately detect changes in internal and external conditions.

In the sensor unit 20 according to the present invention, the current sensor unit 21, the infrared sensor unit 23, and the ultrasonic sensor unit 25 as described above may be selectively applied, or some of them may be applied together in a group. A plurality of such sensor units 20 may be installed inside/outside the retractable grandstand 10.

The database unit 30 according to the present invention includes a reference database 31 and a measurement database 33.

The reference database 31 stores reference data. At least one of a current of the driving unit 11, a temperature change on a movement path of the movable grandstand (A), and a distance to an object existing on the movement path is measured or set in advance before the operation of the driving unit 11 and stored as the reference data.

The measurement database 33 stores measurement data. When the retractable grandstand 10 is drawn out or retracted, at least one of a current of the drive unit 11, a temperature change on the movement path, and a distance to an object existing on the movement path is measured in real time and stored as the measurement data.

The reference data stored in the reference database 31 is data measured by the sensor unit 20 or set by an administrator before the retractable grandstand 10 is drawn out or retracted.

In case that there are no obstacles inside and outside the retractable grandstand 10 when the retractable grandstand 10 is drawn out or retracted, data measured by the current sensor unit 21, the infrared sensor unit 23, and the ultrasonic sensor unit 25 included in the sensor unit 20 may be stored as the reference data in the reference database 31.

For example, in case of the current sensor unit 21, a measured value of a current flowing through the driving unit 11 operated to draw out or retract the retractable grandstand 10 when there are no obstacles inside and outside the retractable grandstand 10 is stored in the reference database 31as the reference data having a certain range.

In case of the infrared sensor unit 23, a measured value of a temperature change on a path through which the retractable grandstand 10 is drawn out or retracted without obstacles is stored in the reference database 31 as the reference data having a certain range.

In case of the ultrasonic sensor unit 25, a measured value of a distance to an object existing on the drawn-out or retracted path of the retractable grandstand 10 without obstacles is stored in the reference database 31 as reference the reference data having a certain range.

As the reference data, an arbitrary value may be selected by a user or a manufacturer. Alternatively, the reference data may be a particular range of values set to have a certain error range by the user or the manufacturer. The reference data may be measured or set when the retractable grandstand 10 according to the present invention is initially set, and may have a threshold value or range in consideration of a certain error range.

Measurement data measured in real time when the retractable grandstand 10 is drawn out or retracted is stored in the measurement database 33. For example, in case of the current sensor unit 21, a measured value of a current flowing through the driving unit 11 operated to draw out or retract the retractable grandstand 10 is stored in the measurement database 33 as the measurement data. In case of the infrared sensor unit 23, a measured value of a temperature change on the drawn-out or retracted path of the retractable grandstand 10 is stored in the measurement database 33 as the measurement data. In case of the ultrasonic sensor unit 25, a measured value of a distance to an object existing on the drawn-out or retracted path of the retractable grandstand 10 is stored in the measurement database 33 as the measurement data.

The measurement data measured by the sensor unit 20 according to the present invention is data obtained by detecting an object inside the retractable grandstand 10 or an object on the drawn-out or retracted path of the retractable grandstand 10, but there may occur a case that the detected object is not an obstacle. For example, a floor on which the retractable grandstand 10 is installed, dust on the floor, a sudden hot blow of a heater, and the like may also be detected as an object by the sensor unit 20. Therefore, it may be necessary to further determine whether the object detected by the sensor unit 20 is an obstacle. Such determination is as follows.

While the retractable grandstand 10 is drawn out or retracted, the control unit 40 according to the present invention compares measurement data with the reference data stored in the reference database 31. The measurement data is measured by the sensor unit 20 of the retractable grandstand 10 being currently drawn out or retracted, and stored in the measurement database 33.

If the measurement data is a value within the range of the reference data, it may be determined that there are no obstacles inside the retractable grandstand 10 and on the moving path of the retractable grandstand 10. Conversely, if the measurement data is a value out of the range of the reference data, it may be determined that there are obstacles inside/outside the retractable grandstand 10.

The reference data measured and stored in advance may have a particular range including a certain error range. In some cases, the user or administrator may set the reference data by assigning an arbitrary range or applying an arbitrary value to the measured value.

If the measurement data has a value out of the range of the reference data and it is therefore determined that there is an obstacle, the control unit 40 may stop the operation of the driving unit 11 for drawing out or retracting the retractable grandstand 10 or reduce the driving speed of the driving unit 11. If the measurement data has a value out of the range of the reference data, but there is no significant difference, the control unit may continue to track the object detected through the sensor unit 20 in real time while reducing the driving speed.

The control unit of the present invention determines whether the obstacle is removed, while comparing the measurement data and the reference data in real time. As a result of determination, if the obstacle is removed, the control unit may restore the reduced driving speed to the normal speed. Conversely, if the obstacle is not removed, the control unit may stop the operation of the driving unit 11. In some cases, when the measurement data has a value out of the range of the reference data, but there is no significant difference, the control unit may rather increase the driving speed of the driving unit 11 to pass through a fine obstacle.

Even when the control unit 40 determines that there is an obstacle on the drawn-out or retracted path of or inside the retractable grandstand 10, and stops the operation of the driving unit 11 or changes the driving speed, the sensor unit 20 continuously detects the previously detected object in real time and stores the measurement data in the measurement database. The control unit 40 continuously monitors whether the measurement data falls again within the range of the reference data. If the measurement data falls within the range of the reference data, the control unit determines that the detected obstacle has been removed. Then the control unit restarts the stopped driving unit 11 or normalizes the changed driving speed of the driving unit 11.

The present invention may further include a speaker (not shown) for transmitting a warning signal when an obstacle is detected.

The database unit 30 according to the present invention also includes a deep-learning database 37. The deep-learning database 37 stores deep-learning data, which is based on deep-learning algorithms.

The deep-learning data is data obtained by analyzing information that the control unit 40 controls the driving unit 11, such as stopping the driving unit 11 or changing the speed, upon determining that there are obstacles inside/outside the retractable grandstand. Also, the deep-learning data is data obtained by analyzing information that the control unit 40 controls the driving unit 11, such as restarting the driving unit 11 or normalizing the speed, upon determining that the detected obstacle has been removed.

The deep-learning is a machine learning method proposed to overcome the limitations of artificial neural networks and classify a lot of stored data into similar ones. As the deep-learning algorithms, well-known algorithms such as Convolutional Neural Network (CNN) and Support Vector Machine (SVM) may be used.

The control unit 40 is capable of controlling the driving unit 11 based on the previously analyzed and stored deep-learning data. If any measurement data currently inputted is similar to the previously analyzed and stored deep-learning data, the control unit 40 may control the driving unit 11 in the same way as it has controlled the driving unit 11 in the past.

A result of controlling the driving unit 11 based on the deep-learning data is stored in the deep-learning database 37 to upgrade the learning result.

The automatic retractable grandstand 100 for preventing operation errors due to obstacles according to the present invention may further include a communication unit 50 capable of wired/wireless communication with a user terminal 60.

The user terminal 60 can read a recording medium in which a program for executing a control method according to the present invention to be described below is recorded. The user terminal 60 and the communication unit 50 may use a wireless communication technique such as NFC, RF communication, Bluetooth, ZigBee, Wi-Fi, infrared communication, or the like. The user terminal 60 includes a smart phone, a personal computer, a notebook computer, a beacon, a tablet PC, a wireless remote controller, or the like.

The control unit 40 may transmit, to the user terminal 60 through the communication unit 50, information about whether the driving unit 11 is driven, whether an obstacle is detected inside the retractable grandstand 10 or on the drawn-out or retracted path of the retractable grandstand 10, or the like. The communication unit 50 may receive a control signal of the driving unit 11 from the user terminal 60 and deliver it to the control unit 40. Upon receiving the control signal of the driving unit 11, the control unit 40 may drive the driving unit 11 or stop the driving unit 11 being driven.

The control unit 40 may transmit, to the user terminal 60 through the communication unit 50, information that has controlled the driving unit 11 such as driving, stopping, re-driving, and driving speed adjustment of the driving unit 11. In addition, the control unit 40 may transmit such information about having controlled the driving unit 11 and information about the detected obstacle to the manufacturer through the communication unit 50. Such transmission of information to the user and the manufacturer enables them to analyze various problems occurring in the operation of the retractable grandstand 10 and suggest a solution to the problem.

Meanwhile, the database unit 30 according to the present invention may further include an authentication database 35 in which authenticated user information is stored. The control unit 40 may be configured to enable the control of the driving unit 11 only when authenticated user information is inputted. For authentication of user information, the communication unit 50 receives user information and a control signal of the driving unit 11 from the user terminal 60 and sends the received user information and control signal to the control unit 40. The control unit 40 compares the user information received from the communication unit 50 with the user information stored in the authentication database 35 and, if the user information is identical, draws out or retracts the retractable grandstand 10 in response to the received control signal of the driving unit 11.

Meanwhile, in another embodiment of the automatic retractable grandstand 100 according to the present invention that prevents operation errors due to obstacles, the control of the automatic retractable grandstand 100 may be differently performed in case of controlling the retractable grandstand 10 from a remote location and in case of controlling the retractable grandstand 10 from a short distance.

It may be determined whether an operator of the current retractable grandstand 10 remotely controls the retractable grandstand 10 from a remote location. In case of controlling the retractable grandstand 10 at a short distance rather than a remote location, the sensor unit detects an object around the moving path of the movable grandstand (C) and measures the current flowing through the driving unit 11 to thereby detect a change in the surrounding situation.

In case that the operator controls the retractable grandstand 10 at a short distance, the sensor unit 20 analyzes measurement data obtained in real time by detecting an object or measuring a current and designs an optimal response plan. That is, when a change in the measurement data is detected from the measurement data being currently obtained in real time, control is performed to stop the draw-out or retraction of the retractable grandstand 10 or adjust the draw-out or retraction speed as described above. Thereafter, whether the operation is normal is confirmed from the control result.

However, in case of remotely controlling the retractable grandstand 10 from a remote location, the measurement data obtained by the sensor unit 20 and the reference data stored in the reference database 31 are compared as described above.

In this case, it is possible to determine whether the reference data exists. If the reference data exists, the driving unit 11 is controlled based on comparing the measurement data and the reference data as described above and determining whether the object detected by the sensor unit 20 is an obstacle.

If there is no reference data, as in the above case of controlling the retractable grandstand 10 at a short distance, the sensor unit 20 analyzes the measurement data obtained in real time by object detection or current measurement, and designs an optimal response plan. Then, control is performed to stop the draw-out or retraction of the retractable grandstand 10 or adjust the draw-out or retraction speed, and whether the operation is normal is confirmed from the control result.

In summary, in another embodiment of the automatic retractable grandstand 100 according to the present invention that prevents operation errors due to obstacles, it is determined whether the retractable grandstand 10 is controlled remotely from a remote location, and if the retractable grandstand 10 is controlled at a short distance, the driving control is performed only using the measurement data obtained by the sensor unit 20 without using the database unit 30.

If the retractable grandstand 10 is controlled from a remote location, the retractable grandstand 10 can be controlled based on comparison between the reference data and the measurement data. If there is no reference data, control can be performed using only the measurement data obtained by the sensor unit 20 as in the above case of short-distance control.

In this embodiment of the present invention, the remote location includes overseas.

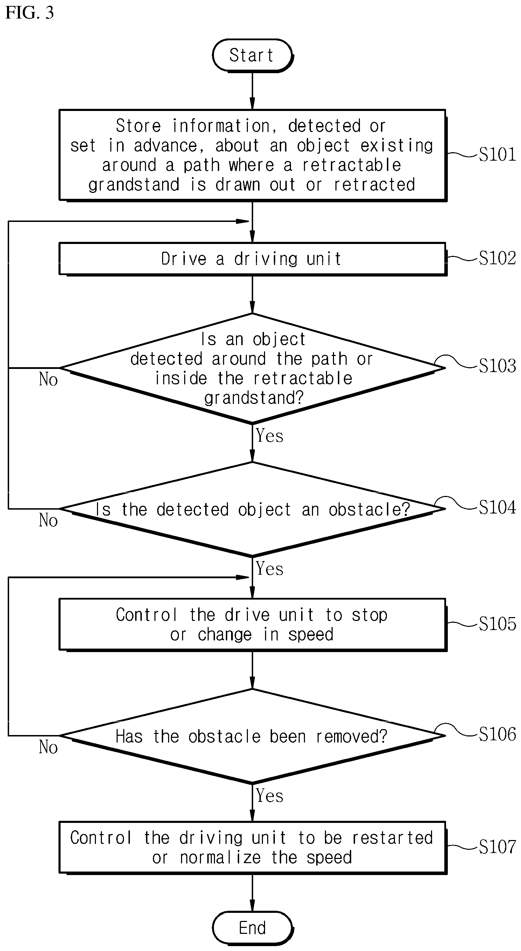

FIG. 3 is a flow diagram illustrating a method for controlling an automatic retractable grandstand capable of preventing an operation error due to an obstacle according to the present invention.

Referring to FIG. 3, the method for controlling an automatic retractable grandstand capable of preventing an operation error due to an obstacle according to the present invention includes a step (S101) of, before a driving unit 11 for drawing out or retracting a retractable grandstand 10 is driven, storing information, detected or set in advance, about an object existing around a path where the retractable grandstand 10 is drawn out or retracted, a step (S102) of driving the driving unit 11 based on a signal for drawing out or retracting the retractable grandstand 10 received from a user terminal 60, a step (S103) of detecting an object existing around the path of or inside the retractable grandstand 10 being drawn out or retracted, a step (S104) of determining whether the detected object is an obstacle, a step (S105) of controlling the drive unit 11 to stop or change in speed when the detected object is an obstacle, a step (S106) of determining whether the obstacle has been removed, and a step (S107) of controlling the driving unit 11 to be restarted or normalize the speed when the obstacle has been removed.

At the step S101, depending on the configuration of the sensor unit 20 according to the present invention, the step of detecting an object around the path where the retractable grandstand 10 is drawn out or retracted may vary.

If the sensor unit 20 includes the current sensor unit 21, the step S101 includes a step of storing reference data by measuring or setting a current of the driving unit 11.

If the sensor unit 20 includes the infrared sensor unit 23, the step S101 includes a step of storing reference data by measuring or setting a change in temperature on the path where the retractable grandstand 10 moves to be drawn out or retracted.

If the sensor unit 20 includes the ultrasonic sensor unit 25, the step S101 includes a step of storing reference data by measuring or setting a distance from the object existing on the path where the retractable grandstand 10 moves to be drawn out or retracted.

The step S101 may be performed when the retractable grandstand 10 according to the present invention is initially set before being operated in earnest.

As described above, the sensor unit 20 includes at least one of the current sensor unit 21, the infrared sensor unit 23, and the ultrasonic sensor unit 25, and the step S101 is independently performed depending on each sensor unit included in the sensor unit 20 according to the present invention.

At the step S102, the control unit 40 receives a control signal for the driving unit 11 for drawing out or retracting the retractable grandstand 10, from the user terminal 60 capable of wired/wireless communication with the communication unit 50 according to the present invention, and drives the driving unit 11. By the driving unit 11, the movable grandstand (A) of the retractable grandstand 10 moves forward or backward. When the control signal for the driving unit 11 is received from the user terminal 60, user authentication may be performed. The authentication method for the user is as described above.

While the driving unit 11 driven at the step S102 moves the movable grandstand (A), at the step S103 the sensor unit 20 according to the present invention detects an object existing on the path of the movable grandstand (A) and an object existing inside the retractable grandstand 10. Depending on whether the sensor unit 20 includes the current sensor unit 21, the infrared sensor unit 23, or the ultrasonic sensor unit 25, the object detection step may vary. Also, depending on each sensor unit included in the sensor unit 20, the object detection step may be independently performed.

At the step S103, if the sensor unit 20 includes the current sensor unit 21, a step of storing measurement data by measuring a current of the driving unit 11 is included. If the sensor unit 20 includes the infrared sensor unit 23, a step of storing measurement data by measuring a change in temperature on the drawn out or retracted path of the retractable grandstand 10 is included. If the sensor unit 20 includes the ultrasonic sensor unit 25, a step of storing measurement data by measuring a distance from the object existing on the drawn out or retracted path of the retractable grandstand 10 is included.

If an object is not detected inside the retractable grandstand 10 and on the moving path of the movable grandstand (A) at the step S103, the driving unit 11 is continuously driven without stopping. However, if an object is detected inside the retractable grandstand 10 or on the moving path of the movable grandstand at the step of detecting the object, the step S104 of determining whether the detected object is an obstacle is performed.

At the step S104, a value measured and stored at the step S103 of detecting an object is compared with a range measured or set at the step S101 of detecting an object in advance. If the value of the step S103 is not included in the range of the step S101, it is determined that the detected object is an obstacle.

That is, at the step S104, the measurement data measured at the step S103 and the reference data measured or set at the step S101 are compared. As described above, the reference data is stored to have a certain range.

If the value of the measurement data is included within the range of the reference data, it is determined that the detected object is not an obstacle. When the detected object is not determined as an obstacle, the driving unit 11 for moving the movable grandstand (A) is continuously driven.

However, if the value of the measurement data is not included in the range of the reference data, the detected object is determined as an obstacle.

If it is determined that there is an obstacle inside the retractable grandstand 10 or on the moving path of the movable grandstand (A) while the retractable grandstand 10 is drawn out or retracted, at the step S105 the driving unit 11 is stopped or the driving speed is adjusted. If the value of the measurement data is not included in the range of the reference data, but if the value of the measurement data is out of the range of the reference data by a small difference, the driving speed of the driving unit 11 may be reduced or increased.

After the driving unit 11 is stopped or the driving speed is adjusted at the step S105, the sensor unit 20 continuously detects the object inside the retractable grandstand 10 or on the moving path of the movable grandstand (A) and stores measurement data, and the control unit 40 compares the measured data with the reference data in real time. That is, after the step S105, it is continuously determined in real time whether the obstacle is removed.

At the step S106, if the sensor unit 20 includes the current sensor unit 21, a step of storing measurement data by measuring a current of the driving unit 11 is included. If the sensor unit 20 includes the infrared sensor unit 23, a step of storing measurement data by measuring a change in temperature on the drawn out or retracted path of the retractable grandstand 10 is included. If the sensor unit 20 includes the ultrasonic sensor unit 25, a step of storing measurement data by measuring a distance from the object existing on the drawn out or retracted path of the retractable grandstand 10 is included.

Depending on each sensor unit included in the sensor unit 20, the step of determining whether the obstacle is removed is performed independently. Also, depending on each sensor unit included in the sensor unit 20, a measured value is stored independently as measurement data in the measurement database 33.

Even after the obstacle is detected and the driving unit 11 is stopped, if the measurement data of the sensor unit 20 becomes included in the range measured or set and stored in advance at the step S101, that is, the range of the reference data, it is determined that the obstacle is removed.

The control method of the automatic retractable grandstand 100 for preventing an operation error due to an obstacle according to the present invention further includes the step (S107) of, when it is determined at the step S106 that the obstacle is removed, controlling the driving unit 11 to be restarted or normalize the speed.

Meanwhile, in an embodiment according to the present invention, each of the step S104 of determining the presence of an obstacle and the step S106 of determining whether the detected obstacle is removed may include a step of controlling the driving unit 11 by using deep-learning data analyzed and stored based on a deep-learning algorithm.

The step of controlling the driving unit 11 by using the deep-learning data at the step S104 is as follows.

The step S104 may further include a step of searching for the existence of the deep-learning data stored through the analysis of the reference data and the measurement data inputted at the steps S101 and S103, respectively. If there is the deep-learning data, a step of controlling the driving unit 11 based on the deep-learning data may be further included. Also, a step of upgrading the deep-learning data by analyzing the result of controlling the driving unit 11 based on the deep-learning data may be further included.

In addition, the step of controlling the driving unit 11 by using the deep-learning data at the step S106 is as follows.

The step S106 may further include a step of searching for the existence of the deep-learning data stored through the analysis of the reference data and the measurement data inputted at the steps S101 and S105, respectively. If there is the deep-learning data, a step of controlling the driving unit 11 based on the deep-learning data may be further included. Also, a step of upgrading the deep-learning data by analyzing the result of controlling the driving unit 11 based on the deep-learning data may be further included.

The method for controlling the automatic retractable grandstand 100 capable of preventing an operation error due to an obstacle according to the present invention may be provided in the form of a non-transitory computer-readable recording medium suitable for storing computer program instructions and data. The computer-readable recording medium may include program instructions, data files, data structures, etc. alone or in combination, and includes all kinds of recording devices in which data that can be read by a computer system is stored. The computer-readable recording medium includes a hardware device specially configured to store and execute program instructions, including magnetic media such as a hard disk, a floppy disk, and a magnetic tape, optical media such as a compact disc read only memory (CD-ROM) and a digital versatile disc (DVD), magneto-optical media such as a floptical disk, and semiconductor memories such as a read only memory (ROM), a random access memory (RAM), and a flash memory. The program instructions include not only machine language codes such as those generated by a compiler, but also high-level language codes that can be executed by a computer using an interpreter or the like. The hardware device may be configured to operate as one or more software modules to perform the operations of the present invention, and vice versa.

Meanwhile, the embodiments disclosed in the description and drawings are merely presented as specific examples to aid understanding, and are not intended to limit the scope of the present invention. It will be apparent to those of ordinary skill in the art to which the present invention pertains that other modifications based on the technical contents of the present invention can be implemented in addition to the embodiments disclosed herein.

**[Reference Numerals]**

| | | | |
|---|---|---|---|
| 10: | Retractable grandstand | 11: | Driving unit |
| 20: | Sensor unit | 21: | Current sensor unit |
| 23: | Infrared sensor unit | 25: | Ultrasonic sensor unit |
| 30: | Database unit | 31: | Reference database |
| 33: | Measurement database | 35: | Authentication database |
| 37: | Deep-learning database | 40: | Control unit |
| 50: | Communication unit | 60: | User terminal |
| 100: | Automatic retractable grandstand for preventing operation error due to obstacle | | |
| A: | Movable grandstand | | |
| B: | Passive grandstand | | |
| C: | Fixed grandstand | | |

## Claims

1. An automatic retractable grandstand for preventing an operation error caused by an obstacle, comprising:
a retractable grandstand drawn out or retracted by a driving unit;
a sensor unit installed on the retractable grandstand and detecting an object existing around a path where the retractable grandstand is drawn out or retracted;
a database unit storing information about the object existing around the drawn-out or retracted path of the retractable grandstand, the information being detected or set in advance by the sensor unit before a driving unit for drawing out or retracting the retractable grandstand is driven; and
a control unit operating the driving unit, determining whether an obstacle exists around the drawn-out or retracted path of the retractable grandstand by comparing an object detection signal received from the sensor unit with information stored in the database unit, and controlling the driving unit to stop an operation or change a driving speed upon determining that the obstacle exists.

2. The automatic retractable grandstand of claim 1, wherein the sensor unit includes at least one of:
a current sensor unit measuring a current of the driving unit and thereby detecting a driving load of the driving unit;
an infrared sensor unit measuring a change in temperature of the object existing around the drawn-out or retracted path of the retractable grandstand and thereby detecting a movement of the object; and
an ultrasonic sensor unit measuring a distance to the object existing around the drawn-out or retracted path of the retractable grandstand.

3. The automatic retractable grandstand of claim 2, wherein the database unit includes:
a reference database storing reference data, wherein at least one of the current of the driving unit, the temperature change of the object around the path, and the distance to the object around the path is measured or set in advance before the operation of the driving unit and stored as the reference data; and
a measurement database storing measurement data, wherein when the retractable grandstand is drawn out or retracted, at least one of the current of the driving unit, the temperature change of the object around the path, and the distance to the object around the path is measured in real time and stored as the measurement data.

4. The automatic retractable grandstand of claim 3, wherein if the measurement data is not included in a range of the reference data while the retractable grandstand is drawn out or retracted,
the control unit determines that the obstacle exists around the path of the retractable grandstand, and
controls the driving unit to stop the operation or change the driving speed.

5. The automatic retractable grandstand of claim 4, wherein after controlling the driving unit to stop the operation or change the driving speed upon determining that the obstacle exists around the path of the retractable grandstand, and if the measurement data is included in the range of the reference data, the control unit determines that the obstacle is removed, and controls the driving unit to be restarted or normalize the driving speed.

6. The automatic retractable grandstand of claim 5, wherein the database unit further includes:
a deep-learning database storing deep-learning data, based on a deep-learning algorithm, obtained by analyzing information that the control unit controls the driving unit upon determining that the obstacle exists, and obtained by analyzing information that the control unit controls the driving unit upon determining that the obstacle is removed, and
wherein the control unit controls the driving unit based on the deep-learning data.

7. The automatic retractable grandstand of claim 1, further comprising:
a communication unit capable of wired/wireless communication with a user terminal and transmitting to the user terminal at least one of information about whether the driving unit is driven, and information about whether the obstacle is detected,
wherein the control unit controls the driving unit by receiving a signal of the user terminal from the communication unit, and transmits information on controlling the driving unit to the user terminal.

8. The automatic retractable grandstand of claim 7, wherein the database unit further includes an authentication database storing authenticated user information,
wherein the communication unit receives user information and a control signal of the driving unit from the user terminal and sends the received user information and control signal to the control unit, and
wherein the control unit compares the user information received from the communication unit with the user information stored in the authentication database and, if the user information is identical, draws out or retracts the retractable grandstand in response to the received control signal of the driving unit.

9. The automatic retractable grandstand of claim 1, wherein the sensor unit is installed in plural inside and outside the retractable grandstand.

10. A method for controlling an automatic retractable grandstand for preventing an operation error caused by an obstacle, the method comprising steps of:
before a driving unit for drawing out or retracting a retractable grandstand is driven, storing, in a database unit, information about an object existing around a path where the retractable grandstand is drawn out or retracted, wherein the information is detected or set in advance by a sensor unit installed on the retractable grandstand;
driving the driving unit based on a signal for drawing out or retracting the retractable grandstand received from a user terminal;
detecting, by the sensor unit, an object existing around the path of or inside the retractable grandstand being drawn out or retracted;
determining whether the detected object is an obstacle, by comparing an object detection signal received from the sensor unit with the information stored in the database unit;
controlling the drive unit to stop or change in speed when the detected object is determined as the obstacle;
determining whether the obstacle is removed; and
controlling the driving unit to be restarted or normalize the speed when the obstacle is determined as being removed.

11. The method of claim 10, wherein each of the step of determining whether the detected object is an obstacle, and the step of determining whether the obstacle is removed includes:
a step of controlling the driving unit based on deep-learning data analyzed and stored through a deep-learning algorithm.

12. A recording medium having a program recorded therein for executing the method according to claim 10 or claim 11.
